# FASCICULE DE BREVET EUROPEEN

(11) **EP 0 382 645 B1**
(45) Date de publication et mention de la délivrance du brevet: **23.02.1994**
(21) Numéro de dépôt: 90400353.0
(22) Date de dépôt: 09.02.1990
(51) Int. Cl.: F16F 9/32

(54) **Butée de limitation de course pour suspension automobile ou analogue, à caractéristiques de rigidité progressive et autostable en compression**
Hubbegrenzungsanschlag für die Radaufhängung von Kraftfahrzeugen oder dergleichen mit progressiver Steifigkeitskennlinie und eigenstabilem Kompressionsverhalten
Abutment to limit the stroke of vehicle suspensions or the like, having progressive stiffness characteristics and being self-stabilizing under compression

(30) Priorité: 10.02.1989 FR 8901729
(43) Date de publication de la demande: 16.08.1990
(73) Titulaire: CAOUTCHOUC MANUFACTURE ET PLASTIQUES SOCIETE ANONYME, F-78000 Versailles (FR)
(72) Inventeur: Fontenay, Etienne, F-58300 Decize (FR)

(56) Documents cités:
- DE-A- 2 845 243
- DE-A- 3 151 771
- DE-B- 1 028 360
- DE-U- 8 630 181
- GB-A- 1 008 912
- US-A- 1 902 323
- PATENT ABSTRACTS OF JAPAN, vol. 11, no. 218 (M-607)[2665], 15 juillet 1987;& JP-A-62 035 128 (BRIDGESTONE CORP.) 16-02-1987

## Description

La présente invention est relative au domaine des suspensions à grande flexibilité, notamment les suspensions pour automobiles et toutes les applications dérivées demandant une grande variation de flexibilité sur la course utile d'une butée de limitation de débattement.
Elle convient, plus particulièrement, lorsque la butée de limitation de débattement est utilisée en fin de course de l'amortisseur associé à un ressort et qu'elle est disposée autour de la tige dudit amortisseur, mais sans nécessiter de guidage pour son fonctionnement.

Les améliorations du confort dans les automobiles ont fait l'objet de nombreuses optimisations dans la progressivité des butées de fin de course, entrant en contact le plus tôt possible, sans modification sensible de la rigidité d'origine de la suspension. Au-delà de cette zone de prise de contact, le rôle de la butée progressive est d'accroître rapidement la rigidité apparente, jusqu'à multiplier par cinq à dix celle de la suspension principale. De cette façon, est supportée, pour de courtes durées, la plus grande partie de la charge, comprise alors entre deux et trois fois la pesanteur, lorsqu'est atteinte la limite fixée par la géométrie des liaisons mécaniques entre le véhicule à suspendre et le sol.

La fonction d'une telle butée progressive est, le plus souvent, assurée par des pièces en caoutchouc ou en élastomères cellulaires.
L'optimisation des formes desdites pièces a donné lieu à un nombre considérable d'améliorations successives, parmi lesquelles peuvent être retenues, en premier, celles décrites dans les brevets FR 969.407 de HENS et THIEMANN, FR 1.052.883 de RUEGG et US 3.037.764 de PAULSEN.

Cette première génération propose une progressivité très limitée à la rigidité de pièces réalisées par des moulages de caoutchouc compact et dont la hauteur ne dépasse guère le diamètre maximal.

Deux exemples d'amélioration de la flexibilité de telles butées sont donnés par le brevet brésilien PI 78.07436 de GOULD AXIOS où "un corps creux cylindrique de caoutchouc peut disposer d'une ou de deux gorges apportant une extrême flexibilité" - ainsi que par le brevet US 4.681.304 de CHRYSLER MOTORS - où "une butée de compression axiale est formée de deux parois cylindriques concentriques reliées par une pluralité de petits ponts en forme de trous borgnes, la hauteur étant sensiblement égale au diamètre".

Toutes ces butées étant utilisées sans guidage par un appui auxiliaire, ni extérieur ni sur une tige centrale, leurs possibilités sont limitées par le phénomène de flambage. En effet, la moindre dissymétrie des contraintes provoque l'effondrement de la réaction axiale par un déport latéral de la matière comprimée qui devient, alors, incapable de transmettre, entre ses appuis, une force notable.

Une génération plus récente de butées additionnelles de limitation progressive du débattement a été rendue possible par les propriétés mécaniques d'élastomères cellulaires de polyuréthane, la variation progressive de rigidité en fonction de l'écrasement étant une caractéristique interne du matériau.

Un exemple de butée à base de polyuréthane cellulaire est donné dans le brevet DE 1.238.278 de LEMFORDER KUNSTSTOFF et utilise la conjugaison du caractère cellulaire du matériau et d'un creux interne où l'expansion peut, en outre, être dirigée. Un exemple de suspension auxiliaire en polyuréthane cellulaire est décrit dans le brevet FR 2.188.736 de KLEBER COLOMBES où la variation de rigidité est obtenue par la variation de l'appui progressif sur les faces bisautées d'éléments unitaires superposables.

Ces dispositifs, en polyuréthane cellulaire, utilisent un matériau qui, non seulement, est onéreux mais présente également l'inconvénient d'être sensible à l'eau, ce qui se traduit par deux phénomènes : une absorption d'humidité ambiante, due au caractère cellulaire du matériau conduit à une sensibilité au gel, aux températures inférieures à zéro degré qui provoque la destruction des cellules ; d'autre part, une sensibilité chimique à l'humidité rencontrée dans un passage de roue se traduit par une hydrolyse de la matière et sa destruction prématurée.

Une demande de brevet français 88.13146 (EP-A-0 363 271, publiée le 11 avril 1990) de la demanderesse porte sur une suspension auxiliaire monobloc, à caractéristique de rigidité non linéaire. Réalisée en composition élastomérique compacte, elle est disposée, de manière impérative, concentriquement à la tige de l'amortisseur télescopique associé à un ressort.
Cette suspension, dont le rapport de forme est au moins égal à 2.5, aboutissement d'une optimisation de formes, met en jeu des guidages multiples sur la tige centrale associée, au moyen d'une pluralité d'éléments cylindriques en appui permanent sur ladite tige.
Dans ses conditions d'emploi, cette suspension auxiliaire est en usage permanent sur toute la course utile. Sa rigidité, étant additive à celle d'un ressort à rigidité le plus souvent constante, une de ses caractéristiques est une variation de rigidité, sur la course utile, dans un rapport au moins égal à dix - et préférentiellement vingt-. La course utile dépasse la moitié de la course totale possible. La progressivité de la rigidité est due à une alternance de nervures de renfort et d'olives déformables, raccordées par des congés toriques, et comportant chacune une gorge interne.

L'objectif de la présente invention est l'application de la progressivité de rigidité à des conditions d'emploi notablement différentes, ce qui conduit à d'autres formes caractéristiques.

La présente invention concerne en effet, une butée à rigidité rapidement évolutive, dont la fonction est bien d'entrer en contact, dans la zone utile de la suspension et d'en limiter, ensuite, le débattement. Quoique souvent utilisée concentriquement à une tige d'amortisseur, elle présente la particularité de ne pas utiliser d'appui sur ladite tige.

Elle doit la progressivité de sa rigidité à ses formes propres, dans un facteur de forme très voisin de deux pour la partie utile. Les apparences extérieures d'une butée évidée, selon l'invention, sont cylindriques ou pluri-biconiques, marquées par de fortes gorges.

Cependant, c'est la forme de la paroi interne et l'alternance de parties minces formant charnières qui caractérisent son aptitude à la déformation et la stabilité de cette pièce, très déformable, sans flambage.

L'invention consiste donc en une butée de limitation de course, utilisée en complément d'une suspension pour automobile ou analogue, à caractéristiques de rigidité progressive, comportant trois éléments, de révolution, superposés selon la direction axiale, dont les éléments extrèmes sont reliés à l'une des extrémités à une collerette de fixation et à l'extrémité opposée à une couronne portant des tétons pour l'entrée en contact dynamique sur un plan mobile, lesdites couronne et collerette formant les parties d'extrémité axiales de ladite butée. Une telle butée est décrite par le document JP-A-62 035128.

L'invention est définie par les caractéristiques des revendications indépendantes 1, 2 et 3. Des modes particuliers de réalisation de la butée selon l'invention sont définis par les revendications dépendantes 4 à 9.

Les caractéristiques et les variantes de l'invention seront mieux comprises à la lecture de la description accompagnant les dessins, dans lesquels :
- la figure 1 est une coupe axiale d'une butée à formes extérieures biconiques selon l'invention ;
- la figure 2 est une coupe axiale d'une variante dont les formes extérieures sont cylindriques ;
- la figure 3 est une coupe de cette dernière variante, déformée vers la mi-course de son écrasement ;
- la figure 4 est une coupe de la même variante, déformée à la limite de l'écrasement maximal ;
- la figure 5 est un graphique décrivant la loi force-déplacement de la réaction axiale sur la butée ;
- la figure 6 est la coupe axiale d'une variante de forme différente des précédentes ;

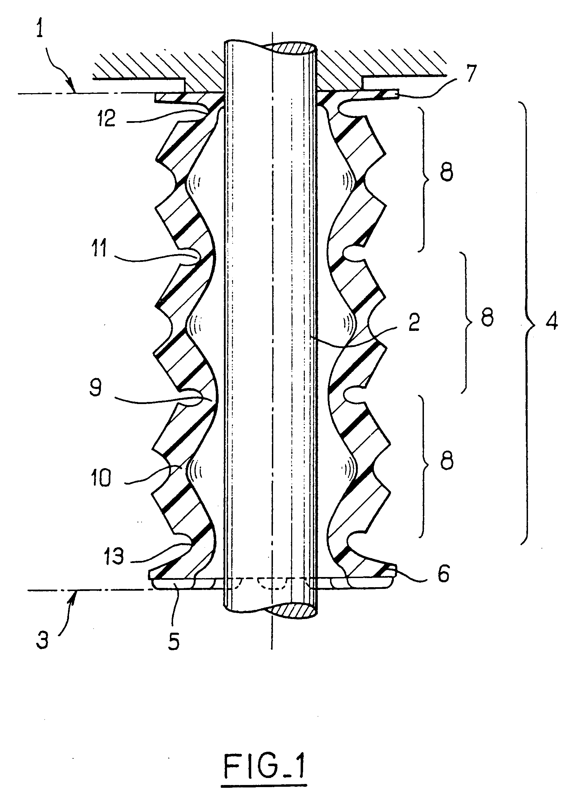

La figure 1 représente en coupe axiale une butée de limitation de course conforme à l'invention.
Elle est fixée contre un plan d'appui (1) par un léger serrage sur une tige (2), qui est le plus souvent la tige d'un amortisseur télescopique, mais ceci de façon totalement indépendante de sa fonction. Cette dernière consiste à exercer une réaction axiale sur le plan mobile (3) lorsque celui-ci se rapproche du plan d'appui (1).

La butéee (4) comporte en vue de ce contact une série de têtons (5) présentant un léger bombé - en forme de calottes sphériques ou de batonnets radiaux, dont le rôle est d'éviter une brutalité du choc dynamique quand le plan mobile (3) est animé de déplacements alternatifs qui seraient source de bruit.

L'appui progressif desdits têtons (5), d'une hauteur millimétrique, tout au plus, permet l'échappement de l'air inclus dans le volume interne lorsque celui-ci subit des variations notables, le bruit émis étant un possible inconvénient.

Entre une couronne (6) qui porte ces têtons et une collerette (7) qui centre la butée sur la tige (2) du côté fixe, par exemple sur le chassis du véhicule, la butée (4) est constituée de trois éléments biconiques (8).
Ceux-ci sont reliés entre eux et également à la couronne (6) et à la collerette (7) par une paroi mince formant charnière continue (9), située sur leur petit diamètre.

Dans un exemple, dont d'autres applications peuvent être déduites par homothétie, la butée de hauteur totale entre les plans d'appui (1) et (3) de 106 millimètres, la hauteur libre de chaque élément biconique (8) étant 31 millimètres, l'épaisseur des parois biconiques est de 8 millimètres et l'épaisseur de la paroi mince formant charnière continue (9) est de 3,5 millimètres.

L'encombrement diamétral des éléments biconiques (8) est de l'ordre de 48 millimètres à l'état libre ; il s'accroît, bien sûr, dès que la compression commence, après effacement des têtons (5) assurant la progressivité du contact sur le plan mobile (3). Alors apparaît le rôle d'une autre paroi mince (10), légèrement plus épaisse que la paroi mince formant charnière continue (9) et de longueur développée sensiblement plus élevée que celle de ladite paroi mince formant charnière continue (9), puisqu'elle est située sur le grand diamètre, dans le plan de symétrie de chacun des éléments biconiques (8). Epaisse de 4 millimètres dans l'exemple pré-cité, cette autre paroi mince (10) présente un accroissement de diamètre, tandis que la paroi mince formant charnière continue (9) s'écrase et fléchit, dès le début de course à grande flexibilité.

A ce stade le plus petit diamètre intérieur de la butée (4) diminue et se rapproche de la tige (2) sans qu'un contact ne se produise. En effet, l'effacement d'une forte gorge (11) qui marque la différence d'épaisseur entre la paroi mince formant charnière continue (9) et l'épaisseur des éléments biconiques (8) fait que les parois externes des éléments voisins viennent en contact.

Il en est de même pour les fortes gorges (12) et (13) qui séparent les deux éléments biconiques (8) extrêmes de la collerette (7) d'une part, et de la couronne (6) d'autre part. Les parois externes des éléments biconiques (8) sont dès lors en contact entre elles sur un diamètre nettement accru ; ceci explique la stabilité intrinsèque de la butée (4) qui présente, sous une réaction de compression encore minime, un facteur de forme apparent déjà nettement réduit par rapport à celui qu'elle avait en début de compression.

Dans la course d'écrasement ultérieure, la compression axiale subie par la paroi mince formant charnière continue (9), s'oppose nettement, du fait d'un facteur de forme local élevé, à une réduction du diamètre, car ceci se traduirait par une compression radiale de la matière.

Au contraire, l'autre paroi mince (10), qui relie entre eux les diamètres extérieurs des éléments biconiques (8), subit une contrainte circonférentielle de tension, cumulée à une contrainte axiale de compression sollicitant ainsi la matière essentiellement en cisaillement.

Le rayon torique situé au fond des fortes gorges (11) (12) et (13) relie les surfaces extérieures de deux éléments biconiques (8) entre eux ou avec la collerette (6) et la couronne (7). Sa valeur est donc fondamentale et son optimisation est la garantie de tenue à la fatigue alternative de l'ensemble.

Un éventuel défaut de symétrie dans la rigidité ne pourrait se traduire que par une entrée anticipée en contact des parois des éléments voisins séparées par lesdites fortes gorges (11) (12) (13). Il en résulte que le système est autostable, en cas de dissymétrie.

Au-delà de ce stade, les parois intérieures des éléments biconiques (8) viennent en contact entre elles et l'ensemble élastomérique entre en compression simple, apportant la rigidité élevée que demande la limitation de course par la butée. Le léger retrait qui peut être observé, derrière la collerette (7), sur le plan d'appui (1), favorise l'expansion du bloc quasi-cylindrique, devenu massif, constitué par la butée (4).

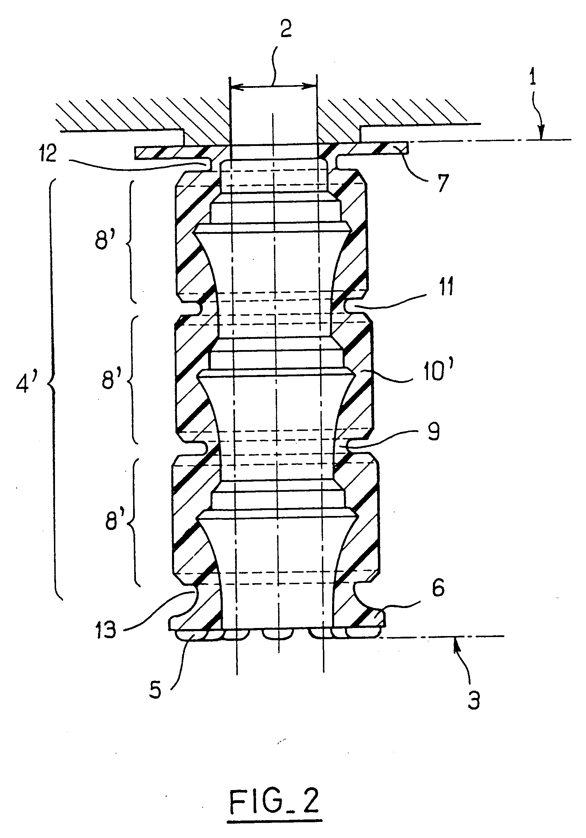

La figure 2 représente, dans la même situation, une variante dont les formes extérieures sont cylindriques à l'état libre, et dont les performances peuvent être identiques à celles de la butée décrite précédemment. La description d'une butée (4'), fixée contre un plan d'appui (1) par un léger serrage sur une tige (2) pour exercer une réaction sur un plan mobile (3), reste identique à la précédente en ce qui concerne la fonction de têtons (5) portés par une couronne (6) et le rôle d'une collerette (7). Une paroi mince, formant charnière continue (9), au fond de fortes gorges (11) (12) (13) relie, de la même façon, trois éléments (8') de surface externe devenue cylindrique.

Lesdits éléments (8'), dont la hauteur dans un exemple d'application est encore 31 millimètres, présentent, pour assurer la meilleure déformabilité, un diamètre extérieur respectivement de 46 millimètres, 44 millimètres et 42,5 millimètres, pour une couronne (6) de 47 millimètres et une collerette (7) de 57 millimètres. La surface interne de chacun desdits éléments (8') est de diamètres variés, étagés de façon qu'une paroi nettement plus mince (10') localise le début de la déformation dans le plan de symétrie de chaque élément (8').

L'étagement des diamètres est obtenu par la succession, dans chacun des éléments (8') d'une partie cylindrique de diamètre minimal, d'une zone de raccordement torique, d'un tronc de cone d'angle au sommet 45° environ, d'une nouvelle partie cylindrique terminée par un épaulement plan et d'un nouveau tronc de cône d'angle au sommet 45° environ sur le diamètre interne maximal de l'élément (8').
Ladite partie cylindrique de diamètre minimal est ménagée au droit et de part et d'autre des deux fortes gorges (11), créant ainsi la paroi mince formant charnière continue (9). Ladite zone de raccordement torique est reliée au tronc de cone de plus grand diamètre d'une part et à la partie cylindrique de diamètre minimal d'autre part.

En déformation, lorsque débute la compression axiale sur la butée (4'), les fortes gorges (11) se ferment et, simultanément, il se produit un gonflement des éléments (8'), par accroissement du diamètre au droit des parois nettement plus minces (10').

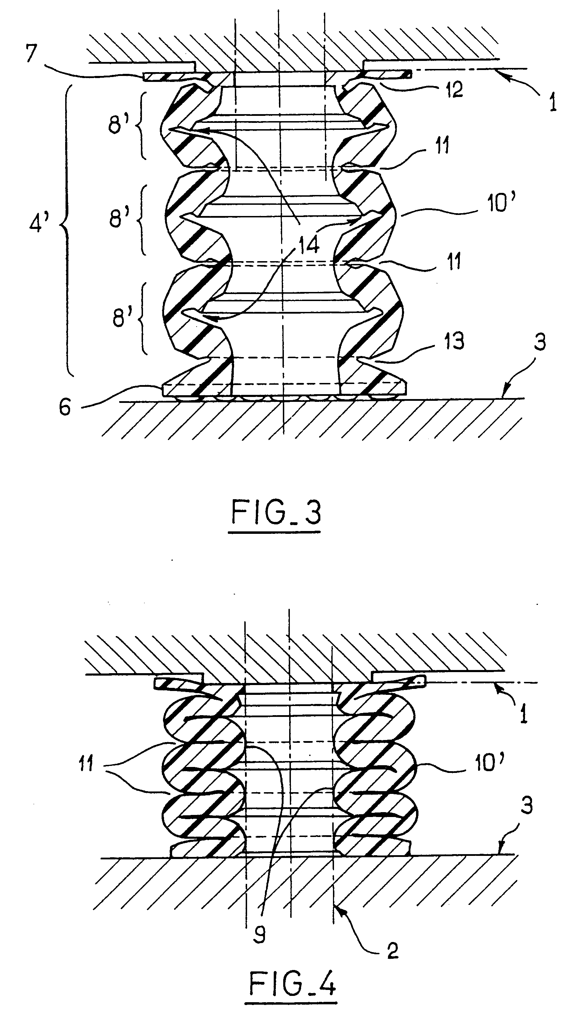

La stabilité est assurée par l'entrée en contact des parois extérieures des éléments voisins, de part et d'autre de chacune des fortes gorges (11), tandis que croît le gonflement dans leur plan axial. Cette déformation, difficile à observer expérimentalement vers l'intérieur a été étudiée par simulation grâce au calcul par éléments finis, dont un stade intermédiaire fait l'objet de la figure 3, le stade final de compression étant représenté par la figure 4.

La figure 3 représente, toujours en coupe axiale, la variante de la butée (4') en cours de compression axiale. Celle-ci est figée, pour plus de clarté, juste avant la fermeture des fortes gorges (11), situation où les parois extérieures des éléments (8') entrent alors en contact entre elles d'une part, et par l'effacement des fortes gorges (12) et (13) prennent appui, d'autre part, sur la couronne (6) et la collerette (7).

La simultanéité de ces évènements n'étant pas évidente, l'optimisation, résultant du calcul par éléments finis, conduit à choisir des diamètres extérieurs des éléments de surface externe cylindrique (8') légèrement différents, comme indiqué dans l'exemple d'application, cette conception étant confirmée par le comportement expérimental de la butée (4').

Pendant cette prise de contact, sur un diamètre suffisamment grand pour assurer la stabilité, le gonflement, en son milieu, de chaque élément (8') se fait par effondrement des parois nettement plus minces (10') devenues complètement extérieures à la partie la plus massive des parois.

Vue dans la section, la rotation de ces six éléments les plus massifs se produit par la rencontre d'arêtes (14) avec la paroi opposée, lesdites arêtes (14) résultant de l'étagement des différents diamètres intérieurs. Après ce stade, la déformation de la butée (4) à parois extérieures biconiques et celle de la butée (4') à surface externe cylindrique sont absolument identiques ; leur déformation maximale est décrite sur la figure 4.

La figure 4 est la coupe axiale de l'une ou l'autre des deux variantes décrites précédemment, arrivée en fin d'écrasement, dû au rapprochement du plan mobile (3) vers le plan d'appui (1). Lorsque la fermeture des fortes gorges (11) (12) (13) est totale, la réaction exercée par la butée (4) ou (4') est devenue celle d'un bloc de caoutchouc quasi massif dont la compressibilité n'est plus possible que par accroissement de diamètre lorsque la hauteur diminue, du fait de l'incompressibilité volumétrique de la composition élastomérique compacte.
La zone où se trouvait l'autre paroi mince (10) ou la paroi nettement plus mince (10') se trouve tendue dans le sens circonférentiel après un écrasement axial important ; le taux de cisaillement pur, subi par le matériau, participe donc à la stabilité transversale de la pièce.

Au contraire, la zone où se trouvait la paroi mince formant charnière continue (9) a disparu, par écrasement à la fois axial et circonférentiel, ce qui est un gage de bonne tenue à la fatigue pour cette zone qui travaille, le plus fréquemment, dans le début de course de la butée. La réduction de diamètre peut aller jusqu'au contact sur la tige (2) sans que ceci, intervenant seulement en fin de compression, n'ait une importance sur la rigidité ou sur l'amortissement par frottement.

Dans la présente invention, la matière ne nécessite pas de propriétés lubrifiantes incorporées, contrairement à différents dispositifs de l'art antérieur exigeant un appui sur la tige de guidage. Ladite matière transmet ses contraintes de compression bidirectionnelles, vers l'intérieur, par rétraction circonférentielle, à très faible déformation dans la paroi mince formant charnière continue (9).

Lorsque la partie la plus massive des éléments (8) ou (8') est en compression totale, l'instabilité est évitée en brisant l'homogénéité des contraintes.

Dans la variante de butée à parois extérieures biconiques, d'une part, l'effet vient du contact des surfaces externes des éléments biconiques (8) après la fermeture des fortes gorges (11). En effet, deux arêtes relativement vives, en vis à vis, viennent en contact après l'effacement de la paroi mince formant charnière continue (9) et subissent alors une compression rapidement croissante.

Dans la variante de butée à surface externe cylindrique, d'autre part, la fermeture des fortes gorges (11) est plus progressive du fait de l'existence d'un chanfrein qui termine les surfaces extérieures cylindriques. L'hétérogénéité des contraintes est provoquée par l'existence des arêtes (14), internes, qui génèrent localement la compression rapidement croissante, après effacement de la paroi mince formant charnière continue (9).

Il est connu que des éléments homogènes empilés subissant une forte compression présentent, dans ces circonstances, une instabilité à laquelle remédie, dans la présente invention, la présence de l'arête, soit externe, soit interne.

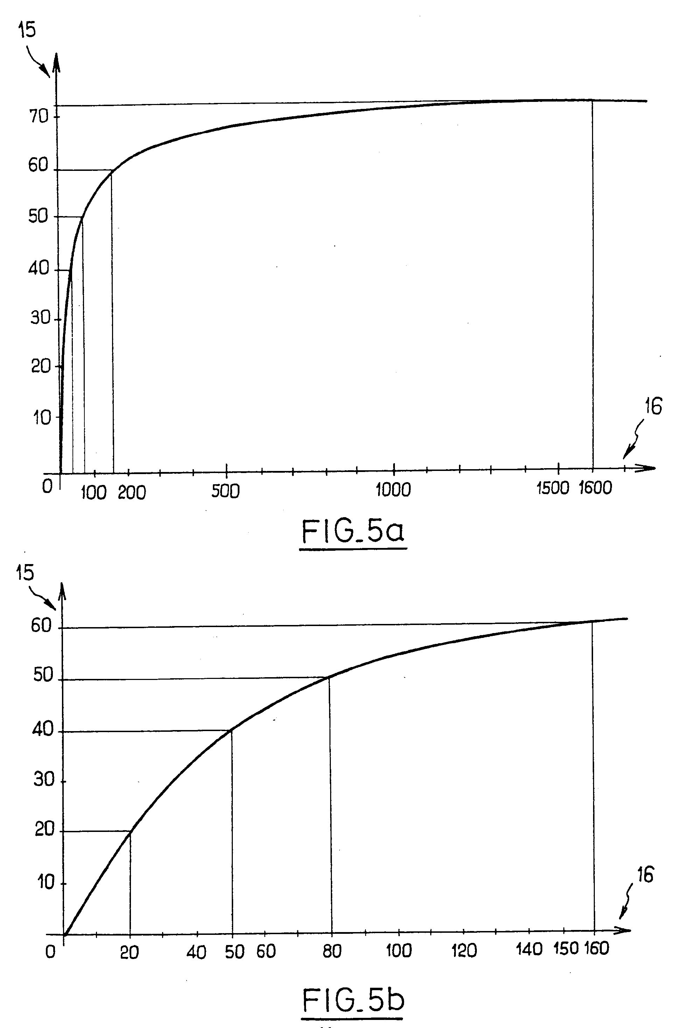

La figure 5 est un graphique représentant à deux échelles différentes le diagramme force - déplacement de la réaction axiale -.
L'axe des ordonnées (15) représente en millimètres les courses de rapprochement du plan mobile (3) et du plan d'appui (1).

Sur la vue 5a, l'axe des abscisses (16) représente les forces, entre 0 et 1600 daN, alors que, sur la vue 5b, la même abscisse (16) représente les forces entre 0 et 160 daN. La vue 5a, seule, laisserait croire à une très grande flexibilité, par exemple sur 50 millimètres de course, terminée par une mise en compression rapide sur les 20 ou 22 millimètres suivants entre 200 daN et 2000 daN de réaction. Or, c'est une simple conséquence des échelles que la vue 5b rétablit à sa juste valeur.

Les variantes de butée à parois extérieures biconiques (4) et de butée à surface externe cylindrique (4') présentent, toutes deux, la même progressivité de réaction, illustrée sur la vue 5b, où la tangente à l'origine correspond à l'effacement des tétons (5). La loi sensiblement parabolique dans les zones, importantes pour le confort, se situant entre environ 20 daN et 80 daN de réaction correspond, entre 20 et 50 millimètres d'écrasement, à l'effacement des parois minces formant charnière continue (9) puis à celle des parois nettement plus minces (10), (10'), amorçant le gonflement diamétral des éléments (8) ou (8'). Ces événements se produisent successivement sans qu'apparaisse aucune discontinuité du graphique, mettant ainsi en évidence la progressivité de la fonction butée.

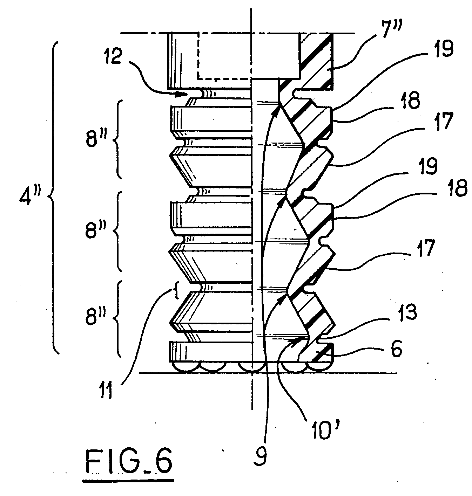

La figure 6 montre, en demi-coupe axiale et demi-vue extérieure, une variante dont la forme intermédiaire peut se déduire de la figure 1 pour la moitié inférieure de chacun des éléments (8) et de la figure 2 pour la moitié supérieure des éléments (8').

Cette butée (4'') présente une forme intérieure biconique, issue de moulage, qui est analogue à celle de la butée (4) à parois extérieures biconiques.

Par contre, la forme extérieure des éléments (8'') présente, pour la moitié inférieure, la forme monoconique des éléments (8) et, pour la moitié supérieure, la forme cylindrique des éléments (8').

Les autres composants étant identiques à l'exception de la collerette (7'') plus massive que la collerette (7), le comportement de la butée (4'') est identique à celui des butées (4) et (4').

En particulier, après fermeture des fortes gorges (11) par écrasement de la paroi mince formant charnière continue (9), l'appui des parois extérieures des demi-éléments monoconiques (17) et des demi-éléments à surface extérieure cylindrique (18) est caractérisé par une localisation des contraintes, due au contact de l'arête extérieure (19) qui joue, avant l'écrasement complet de l'ensemble monobloc, le même rôle que l'arête intérieure (14) de la variante précédente.

Dans cette nouvelle variante, la couronne (6), qui présente la même forme extérieure que le demi-élément à surface extérieure cylindrique (18), a été intégrée dans l'élément (8'') contigu qui se trouve ainsi symétrique de son voisin par rapport au plan qui les sépare ; l'autre paroi mince (10'), située au grand diamètre du demi-élément monoconique (17) forme le fond de la forte gorge (13).

La collerette plus massive (7'') forme la surface antagoniste où l'arête extérieure (19) de son élément (8'') voisin vient assurer la localisation des contraintes à la fermeture de la forte gorge (12).

Dans un mode particulier de réalisation de la butée, cf; revendication 7, il est prévu une nervure massive (20) entre l'élément du milieu et celui relié à la couronne (6), cette nervure servant de support pour l'adaptation d'un soufflet d'étanchéité déformable venant en appui sur ses biseaux tronçoniques, de diamètre supérieur à celui de la couronne (6) et même de la collerette (7). Un tel soufflet a une course plus faible à assurer entre la nervure massive (20) servant de point fixe et le corps mobile de l'amortisseur par l'effet de déformation des deux éléments en compression maximale.

En résumé, les différentes variantes de butées progressives présentent des points communs intéressants lorsque doit être limitée la course d'une suspension.

Basée sur une forme sensiblement tubulaire, obtenue par un moulage monobloc d'une composition élastomérique compacte, chaque variante comporte trois éléments de hauteur inférieure au diamètre. Ils sont reliés entre eux par leur petit diamètre au moyen d'une paroi mince résistant bien à la fatigue grâce à une compression bidirectionnelle, et ils comportent à leur grand diamètre une autre paroi mince, tendue, en fort cisaillement lors du gonflement diamétral desdits éléments.

Dans les différentes variantes, l'écrasement axial est caractérisé par une hétérogénéité, conséquence du contact initial d'une arête due soit à des diamètres intérieurs étagés, soit à une forme biconique extérieure. Ladite hétérogénéité des contraintes contribue fortement à l'autostabilité de la butée, qu'elle soit ou non concentrique à une tige d'amortisseur télescopique.

Le mode de réalisation des différentes variantes de la butée progressive consiste en un moulage, par compression ou par injection, d'une composition élastomérique de formulation adaptée à l'application, dans un moule fermé comportant une empreinte interne de forme appropriée pour conférer à la pièce ses formes extérieures.
Pour créer les volumes intérieurs, un noyau, comportant des formes biconiques et/ou étagées, est placé dans l'empreinte du moule.

Pour certaines variantes, le noyau peut, avantageusement, être réalisé en deux parties (ou plus). Il sera soit rigide soit constitué d'un matériau incompressible, afin d'assurer la contre-pression nécessaire au moulage. Après la phase de vulcanisation, sous l'effet conjugué de la pression et de la température, opération destinée à conférer à la composition élastomérique la forme définitive de la butée progressive, il est procédé au démoulage de la pièce. La butée progressive est dégagée du noyau par déformation de courte durée puis est laissée refroidir à l'état libre.

Le procédé de réalisation de la butée progressive est une technique bien connue de l'industrie de transformation du caoutchouc et ne nécessite que la création d'un moule adapté puisqu'il se pratique sur du matériel conventionnel. Un tel moule, même complexe, est rapidement amorti par les cadences de fabrication de l'industrie automobile.
De ce fait, les différentes variantes de la butée, objet de la présente invention, constituent un moyen particulièrement économique de réaliser une grande progressivité pour la limitation de course d'une suspension, notamment pour automobiles. La butée, objet de l'invention, présente, outre une caractéristique de progressivité de la rigidité, l'avantage de l'autostabilité.

## Revendications

1. Butée de limitation de course, utilisée en complément d'une suspension pour automobile ou analogue, à caractéristiques de rigidité progressive, comportant trois éléments (8), de révolution, superposés selon la direction axiale, dont les deux éléments extrêmes sont reliés à une collerette (7) de fixation et, respectivement, à une couronne (6) portant des tétons (5) pour l'entrée en contact dynamique sur un plan mobile (3), lesdites couronne (6) et collerette (7) formant les parties d'extrémité axiales de ladite butée,
caractérisée en ce que la butée est réalisée sous forme de moulage monobloc d'une composition élastomérique compacte, en ce que lesdits éléments (8) ont une surface externe biconique à l'état libre, et sont reliés, d'une part entre eux, d'autre part à ladite collerette (7) ou à ladite couronne (6) par une paroi mince formant charnière continue (9), située sur leur petit diamètre, en ce que lesdits éléments (8) portent chacun deux arêtes circulaires (14)? à proximité immédiate desdites parois minces formant charnières (9) et en ce que ladite butée de limitation de course est rendue autostable en compression par l'entrée en contact avec la paroi d'un élément (8), ou de la couronne (6) ou de la colerette (7) avec l'arête (14) en regard équipant la surface externe de l'élément adjacent.

2. Butée de limitation de course, utilisée en complément d'une suspension pour automobile ou analogue, à caractéristiques de rigidité progressive, comportant trois éléments (8'), de révolution, superposés selon la direction axiale, dont les deux éléments extrêmes sont reliés à une collerette (7) de fixation et, respectivement, à une couronne (6) portant des tétons (5) pour l'entrée en contact dynamique sur un plan mobile (3), lesdites couronne (6) et collerette (7) formant les parties d'extrémité axiales de ladite butée, caractérisée en ce que la butée est réalisée sous forme de moulage monobloc d'une composition élastomérique compacte, en ce que lesdits éléments (8'), ont une surface externe cylindrique à l'état libre et une surface interne de diamètres étagés, en ce que lesdits éléments (8') portent chacun, sur leur surface interne, une arête circulaire (14) résultant de l'étagement des différents diamètres internes et sont reliés, d'une part entre eux, d'autre part, à ladite collerette (7) ou à ladite couronne (6) par une paroi mince formant charnière continue (9), située sur leur petit diamètre, et en ce que ladite butée de limitation de course est rendue autostable en compression par l'entrée en contact avec la paroi de la surface interne d'un élément avec l'arête (14) équipant la surface interne dudit élément (8').

3. Butée de limitation de course, utilisée en complément d'une suspension pour automobile ou analogue, à caractéristiques de rigidité progressive, comportant trois éléments (8''), de révolution, superposés selon la direction axiale, dont les deux éléments extrêmes sont reliés à une collerette (7) de fixation et, respectivement, à une couronne (6) portant des tétons (5) pour l'entrée en contact dynamique sur un plan mobile (3), lesdites couronne (6) et collerette (7) formant les parties d'extrémité axiales de ladite butée, caractérisée en ce que la butée est réalisée sous forme de moulage monobloc d'une composition élastomérique compacte, en ce que lesdits éléments (8''), ont une surface externe cylindro-conique à l'état libre, et sont reliés d'une part entre eux, d'autre part à ladite collerette (7) ou à ladite couronne (6) par une paroi mince formant charnière continue (9), située sur leur petit diamètre, en ce que lesdits éléments (8'') portent chacun une arête circulaire (19) sur leur surface externe cylindrique et à proximité immédiate d'une charnière formée par la partie mince contigue, et en ce que ladite butée de limitation de course est rendue autostable en compression par l'entrée en contact avec la paroi d'un élément (8''), ou de la couronne (6) ou de la colerette (7) avec l'arête (19) en regard équipant la surface externe de l'élément (8'') adjacent.

4. Butée de limitation de course à caractéristiques de rigidité progressive (4), selon la revendication 1, caractérisée en ce que les trois éléments (8) présentent également une surface biconique, qu'ils sont d'épaisseur constante et qu'ils sont articulés, sur leur grand diamètre par une autre paroi mince (10).

5. Butée de limitation de course à caractéristiques de rigidité progressive (4'), selon la revendication 2, caractérisée en ce que les trois éléments (8') de surface externe cylindrique à l'état libre, présentant une surface interne de diamètres étagés, ménagent une paroi nettement plus mince (10') sur leur plus grand diamètre.

6. Butée de limitation de course à caractéristiques de rigidité progressive (4''), selon la revendication 3, caractérisée en ce que les trois éléments (8'') sont constitués, de façon dissymétrique, d'un demi-élément monoconique (17), de surface externe et de surface interne coniques, à épaisseur sensiblement constante et d'un demi-élément à surface externe cylindrique (18) et à surface interne sensiblement conique, lesdits éléments (8'') ménageant une paroi nettement plus mince (10') sur leur plus grand diamètre.

7. Butée de limitation de course (22) à caractéristiques de rigidité progressive selon l'une des revendications précédentes, caractérisée en ce qu'elle comporte entre l'élément du milieu, qui n'est pas lié à la collerette de fixation (7), et l'élément relié à la couronne (6) munie des tétons (5), une nervure massive (20) associée auxdits éléments par de fortes gorges, ladite nervure massive (20) étant destinée à recevoir un soufflet d'étanchéité.

8. Butée de limitation de course à caractéristiques de rigidité progressive, selon l'une des revendications 1, 2 ou 3, caractérisée en ce que la hauteur à l'état libre de l'ensemble des trois éléments (8) (8') (8'') est très voisine du double du diamètre extérieur et en ce que l'épaisseur de la paroi mince formant charnière continue (9) est voisine du seizième dudit diamètre extérieur.

9. Butée de limitation de course à caractéristiques de rigidité progressive, selon l'une des revendications 4 à 6, caractérisée en ce que l'autre paroi mince (10) ou la paroi nettement plus mince (10') présente une épaisseur voisine du douzième du diamètre extérieur.

## Patentansprüche

1. Wegbegrenzungsstopper zur Verwendung bei einer Aufhängung für Kraftfahrzeuge oder dgl. mit progressiver Federkennlinie, umfassend drei entlang der axialen Richtung übereinander angeordnete, rotationssymmetrische Elemente (8), von denen die beiden äußeren Elemente mit einem Befestigungskragen (7) bzw. mit einem Ansatzkuppen (5) zum dynamischen Eingriff mit einer beweglichen Fläche (3) tragenden Kranz (6) verbunden sind, wobei der Kranz (6) und der Kragen (7) die axialen Endbereiche des Stoppers bilden,
dadurch gekennzeichnet, daß der Stopper in Form eines einstückigen Gußteils aus einer dichten Elastomerzusammensetzung verwirklicht ist, die Elemente (8) im unbelasteten Zustand eine doppelkegelförmige Außenoberfläche aufweisen und einstückigen Gußteils aus einer dichten Elastomerzusammensetzung verwirklicht ist, die Elemente (8) im unbelasteten Zustand eine doppelkegelförmige Außenoberfläche aufweisen und einerseits miteinander, andererseits mit dem Kragen (7) oder dem Kranz (6) über eine an ihrem kleinen Durchmesser angeordnete, ein durchgehendes Scharnier (9) bildende, dünne Wand verbunden sind, die Elemente (8) jeweils in unmittelbarer Nachbarschaft zu den die Scharniere (9) bildenden dünnen Wänden zwei kreisförmige Anschläge (14) aufweisen und der Wegbegrenzungsstopper bei einer Kompression eigenstabil ist, indem die Wand eines Elementes (8) oder der Kranz (6) oder der Kragen (7) mit dem die Außenoberfläche des benachbarten Elementes ausstattenden Stopper (14) in Berührung gelangt.

2. Wegbegrenzungsstopper zur Verwendung bei einer Aufhängung für Kraftfahrzeuge oder dgl. mit progressiver Federkennlinie, umfassend drei entlang der axialen Richtung übereinander angeordnete, rotationssymmetrische Elemente (8'), von denen die beiden äußeren Elemente mit einem Befestigungskragen (7) bzw. mit einem Ansatzkuppen (5) zum dynamischen Eingriff mit einer beweglichen Fläche (3) tragenden Kranz (6) verbunden sind, wobei der Kranz (6) und der Kragen (7) die axialen Endbereiche des Stoppers bilden, dadurch gekennzeichnet, daß der Stopper in Form eines einstückigen Gußteils aus einer dichten Elastomerzusammensetzung verwirklicht ist, die Elemente (8') im unbelasteten Zustand eine zylindrische Außenoberfläche und eine innere Oberfläche mit abgestuften Durchmessern aufweisen, die Elemente (8') an ihren Innenoberflächen jeweils einen kreisförmigen Stopper (14) aufweisen, der die Abstufung der unterschiedlichen Innendurchmesser als Ergebnis hervorbringt, und einerseits untereinander, andererseits mit dem Kragen (7) oder dem Kranz (6) über eine an ihren kleinen Durchmessern angeordnete, ein durchgehendes Scharnier (9) bildende dünne Wand verbunden sind und der Wegbegrenzungsstopper bei einer Kompression eigenstabil ist, indem die Wand der Innenoberfläche eines Elementes mit dem die Innenoberfläche dieses Elementes (8') ausstattenden Anschlag (14) in Berührung gelangt.

3. Wegbegrenzungsstopper zur Verwendung bei einer Aufhängung für Kraftfahrzeuge oder dgl. mit progressiver Federkennlinie, umfassend drei entlang der axialen Richtung übereinander angeordnete, rotationssymmetrische Elemente (8''), von denen die beiden äußeren Elemente mit einem Befestigungskragen (7) bzw. mit einem Ansatzkuppen (5) zum dynamischen Eingriff mit einer beweglichen Fläche (3) tragenden Kranz (6) verbunden sind, wobei der Kranz (6) und der Kragen (7) die axialen Endbereiche des Stoppers bilden,
dadurch gekennzeichnet, daß der Stopper in Form eines einstückigen Gußteils aus einer dichten Elastomerzusammensetzung verwirklicht ist, die Elemente (8'') im unbelasteten Zustand eine kegelzylindrische Außenoberfläche aufweisen und einerseits untereinander, andererseits mit dem Kragen (7) oder dem Kranz (6) über eine auf ihrem kleinen Durchmesser sitzende, ein durchgehendes Scharnier (9) bildende dünne Wand verbunden sind, jedes der Elemente (8'') auf seiner äußeren, zylindrischen Oberfläche und in unmittelbarer Nähe eines durch den angrenzenden dünnen Teil gebildeten Scharniers einen kreisförmigen Stopper (19) trägt und der Wegbegrenzungsstopper bei einer Kompression eigenstabil ist, indem die Wand eines Elementes (8'') oder der Kranz (6) oder der Kragen (7) mit dem die Außenoberfläche des benachbarten Elementes (8'') ausstattenden Stopper (19) in Berührung gelangt.

4. Wegbegrenzungsstopper mit progressiver Federkennlinie (4) nach Anspruch 1, dadurch gekennzeichnet, daß die drei Elemente (8) auf gleiche Weise eine doppelkegelförmige Oberfläche aufweisen, sie eine konstante Dicke aufweisen und daß sie auf ihrem großen Durchmesser durch eine andere dünne Wand (10) gelenkig verbunden sind.

5. Wegbegrenzungsstopper mit progressiver Federkennlinie (4') nach Anspruch 2, dadurch gekennzeichnet, daß die drei Elemente (8') mit zylindrischer Außenfläche im unbelasteten Zustand eine Innenfläche mit abgestuften Durchmessern haben, die eine wesentlich dünnere Wand (10') auf ihrem größeren Durchmesser ausspart.

6. Wegbegrenzungsstopper mit progressiver Federkennlinie (4'') nach Anspruch 3, dadurch gekennzeichnet, daß die drei Elemente (8'') auf unsymmetrische Weise aus einem kegelförmi- gen Halbelement (17) mit konischer Außen- und Innenfläche und im wesentlichen konstanter Dicke und aus einem Halbelement mit zylindrischer Außenfläche (18) und im wesentlichen konischer Innenfläche gebildet sind, wobei die Elemente (8'') eine wesentlich dünnere Wand (10') auf ihrem großen Durchmesser aussparen.

7. Wegbegrenzungsstopper (22) mit progressiver Federkennlinie nach einem der vorhergehenden Ansprüche, dadurch gekennzeichnet, daß er zwischen dem mittleren Element, das nicht mit dem Befestigungskragen (7) verbunden ist, und dem Element, das mit dem Ansatzkuppen (5) aufweisenden Kranz (6) verbunden ist, eine massive Rippe (20) aufweist, die über starke Nuten mit diesen Elementen verbunden ist, wobei diese massive Rippe (20) zur Aufnahme eines Abdichtbalges dient.

8. Wegbegrenzungsstopper mit progressiver Federkennlinie nach einem der Ansprüche 1, 2 oder 3, dadurch gekennzeichnet, daß die Höhe der Anordnung aus den drei Elementen (8) (8') (8'') im unbelasteten Zustand sehr nahe bei dem Doppelten des äußeren Durchmessers liegt und daß die Dicke der ein durchgehendes Scharnier (9) bildenden dünnen Wand nahe bei einem Sechzehntel des äußeren Durchmessers liegt.

9. Wegbegrenzungsstopper mit progressiver Federkennlinie nach einem der Ansprüche 4 bis 6, dadurch gekennzeichnet, daß die andere dünne Wand (10) oder die wesentlich dünnere Wand (10') eine Dicke in der Nähe von einem Zwölftel des äußeren Durchmessers aufweist.

## Claims

1. A stop for limiting compressed length, used to supplement the suspension of a motor vehicle or similar, with characteristics of progressive rigidity, comprising three elements (8) of revolution, superimposed in the axial direction, the two end elements of which are connected to a fastening collar (7) and, respectively, to a crown (6) carrying nipples (5) for coming into dynamic contact over a moving plane (3), said crown (6) and said collar (7) forming the axial end portions of said stop,
characterised in that the stop is produced in the form of a one-piece moulding made from a compact elastomeric composition, in that said elements (8) have a biconical outer surface in the free state and are connected, on the one hand to each other and on the other hand to said collar (7) or to said crown (6), by a thin wall forming a continuous hinge (9), located on their small diameter, in that said elements (8) each carry two circular ridges (14) in the immediate proximity of said thin walls forming hinges (9) and in that said stop for limiting compressed length is made auto-stable in compression by the wall of an element (8), or of the crown (6) or of the collar (7) coming into contact with the facing ridge (14) fitted to the outer surface of the adjacent element.

2. A stop for limiting compressed length, used to supplement the suspension of a motor vehicle or similar, with characteristics of progressive rigidity, comprising three elements (8') of revolution, superimposed in the axial direction, the two end elements of which are connected to a fastening collar (7) and, respectively, to a crown (6) carrying nipples (5) for coming into dynamic contact over a moving plane (3), said crown (6) and collar (7) forming the axial end portions of said stop, characterised in that the stop is produced in the form of a one-piece moulding made from a compact elastomeric composition, in that said elements (8') have a cylindrical outer surface in the free state and an inner surface with stepped diameters, in that said elements (8') each carry, on their inner surface, a circular ridge (14) resulting from the stepping of the various inner diameters and are connected, on the one hand to each other and on the other hand to said collar (7) or to said crown (6), by a thin wall forming a continuous hinge (9), located on their small diameter, and in that said stop for limiting compressed length is made auto-stable in compression by the wall of the inner surface of an element coming into contact with the ridge (14) fitted to the inner surface of said element (8').

3. A stop for limiting compressed length, used to supplement the suspension of a motor vehicle or similar, with characteristics of progressive rigidity, comprising three elements (8'') of revolution, superimposed in the axial direction, the two end elements of which are connected to a fastening collar (7) and, respectively, to a crown (6) carrying nipples (5) for coming into dynamic contact over a moving plane (3), said crown (6) and collar (7) forming the axial end portions of said stop, characterised in that the stop is produced in the form of a one-piece moulding made from a compact elastomeric composition, in that said elements (8'') have a cylindroconical outer surface in the free state, and are connected, on the one hand to each other and on the other hand to said collar (7) or to said crown (6), by a thin wall forming a continuous hinge (9), located on their small diameter, in that said elements (8'') each carry a circular ridge (19) on their cylindrical outer surface and in the immediate proximity of a hinge formed by the contiguous thin portion, and in that said stop for limiting compressed length is made auto-stable in compression by the wall of an element (8''), or of the crown (6) or of the collar (7) coming into contact with the facing ridge (19) fitted to the outer surface of the adjacent element (8'').

4. A stop for limiting compressed length with characteristics of progressive rigidity (4), according to Claim 1, characterised in that the three elements (8) also have a biconical surface, that they are of a constant thickness and that they are hinged, at their large diameter, by another thin wall (10).

5. A stop for limiting compressed length with characteristics of progressive rigidity (4'), according to Claim 2, characterised in that the three elements (8') with a cylindrical outer surface in the free state have an inner surface with stepped diameters, producing a distinctly thinner wall (10') at their greatest diameter.

6. A stop for limiting compressed length with characteristics of progressive rigidity (4''), according to Claim 3, characterised in that the three elements (8'') are constituted in a dissymmetrical manner, by a monoconical half-element (17), with conical outer and inner surfaces having a substantially constant thickness, and by a half-element with a cylindrical outer surface (18) and a substantially conical inner surface, said elements (8'') producing a distinctly thinner wall (10') at their greatest stantially conical inner surface, said elements (8'') producing a distinctly thinner wall (10') at their greatest diameter.

7. A stop for limiting compressed length (22) with characteristics of progressive rigidity according to one of the preceding claims, characterised in that it comprises, between the middle element which is not linked to the fastening collar (7) and the element connected to the crown (6) provided with nipples (5), a solid rib (20) linked to said elements by deep grooves, said solid rib (20) being designed to receive a bellows seal.

8. A stop for limiting compressed length with characteristics of progressive rigidity, according to one of Claims 1, 2 or 3, characterised in that the height in the free state of the assembly of three elements (8) (8') (8'') is very close to double the outside diameter and in that the thickness of the thin wall forming a continuous hinge (9) is close to one-sixteenth of said outside diameter.

9. A stop for limiting compressed length with characteristics of progressive rigidity, according to one of Claims 4 to 6, characterised in that the thickness of the other thin wall (10) or the distinctly thinner wall (10') is close to one-twelfth of the outside diameter.
